# EUROPÄISCHE PATENTSCHRIFT

(11) **EP 4 237 307 B1**
(45) Veröffentlichungstag und Bekanntmachung des Hinweises auf die Patenterteilung: **01.01.2025**
(21) Anmeldenummer: 21819043.7
(22) Anmeldetag: 17.11.2021
(51) Int. Cl.: B61F 5/38, B60G 7/02

(54) **ANORDNUNG ZUR ÜBERTRAGUNG VON LÄNGSKRÄFTEN BEI EINEM SCHIENENFAHRZEUG**
ASSEMBLY FOR TRANSMITTING LONGITUDINAL FORCES IN A RAIL VEHICLE
ENSEMBLE DE TRANSMISSION DE FORCES LONGITUDINALES DANS UN VÉHICULE FERROVIAIRE

(30) Priorität: 16.12.2020 DE 102020216073
(43) Veröffentlichungstag der Anmeldung: 06.09.2023
(73) Patentinhaber: Siemens Mobility GmbH, 81739 München (DE)
(72) Erfinder: ZÄCH, Martin, 83064 Raubling (DE)
(74) Vertreter: Siemens Patent Attorneys
(86) Internationale Anmeldenummer: PCT/EP2021/081987
(87) Internationale Veröffentlichungsnummer: WO 2022/128299

(56) Entgegenhaltungen:
- EP-A1- 1 228 937
- WO-A1-2016/008731
- FR-A1- 2 551 412
- JP-A- S63 231 032

## Beschreibung

Die Erfindung betrifft eine Anordnung zur Übertragung von Längskräften bei einem Schienenfahrzeug.

Aus der Druckschrift EP 1 457 706 A1 ist ein hydraulisches Achslenkerlager bekannt, mit dem das Fahrverhalten von Schienenfahrzeugen sowohl in Kurvenfahrt als auch in Geradeausfahrt optimiert ist. Grundvoraussetzung für diese Optimierung ist ein Radsatz, dessen Ausrichtung im Bezug zur Schiene bzw. in Bezug zu einer befahrenen Kurve einstellbar ist.

Das in der Druckschrift EP 1 457 706 A1 beschriebene hydraulische Achslenkerlager für ein Schienenfahrzeug umfasst einen Lenkerbolzen und wenigstens ein Federelement, das zwischen dem Lenkerbolzen und einem Lenkerauge eines Achslenkers angeordnet ist. Das Federelement umfasst eine hydraulische Buchse, die ein äußeres Gehäuse und ein inneres Gehäuse aufweist. Das äußere Gehäuse umschließt das innere Gehäuse in einem radialen Abstand, so dass ein Ringspalt gebildet wird. Im Ringspalt ist ein (Gummi-) elastisches Element derart angeordnet, dass es zwei diametral einander gegenüberliegende Kammern, die als erste Kammer bzw. zweite Kammer bezeichnet werden, zumindest teilweise begrenzt. Die beiden Kammern sind mit einem hydraulischen Fluid gefüllt. Die beiden Kammern sind über einen intern geführten Überlaufkanal miteinander verbunden.

Durch den Überlaufkanal wird eine Fluidverschiebung zwischen den beiden Kammern erreicht, so dass eine geforderte geringe Längssteifigkeit bei Kurvenfahrt und eine geforderte hohe Steifigkeit bei einer kurvenfreien bzw. geraden Fahrt erreicht wird. Durch diese Einstellung wird außerdem eine verschleißarme und geräuscharme Fahrt in einem Kurvenverlauf der Schiene erreicht. Diese optimierte Ausrichtung des Radsatzes wird über das hydraulische Achslenkerlager ermöglicht, das bei einer Kurvenfahrt eine möglichst geringe Längssteifigkeit und bei einer kurvenfreien bzw. geraden Fahrt eine sehr hohe Steifigkeit aufweisen muss.

Es sind auch "hydraulische Achslenkerlager mit externem Anschluss, HLeA" bekannt, bei denen im Vergleich zum vorstehenden Achslenkerlager der Überlaufkanal extern verwirklicht ist. Zu diesem Zweck weisen die erste Kammer und die zweite Kammer jeweils einen Anschluss auf, der beim "hydraulischen Achslenkerlager mit externem Anschluss, HLeA" nach außen geführt ist. Damit wird ermöglicht, die beiden Kammern extern über eine Verbindungsleitung zu verbinden bzw. eine Kopplung der beiden Kammern mit anderen Komponenten, wie nachfolgend beschrieben, zu ermöglichen.

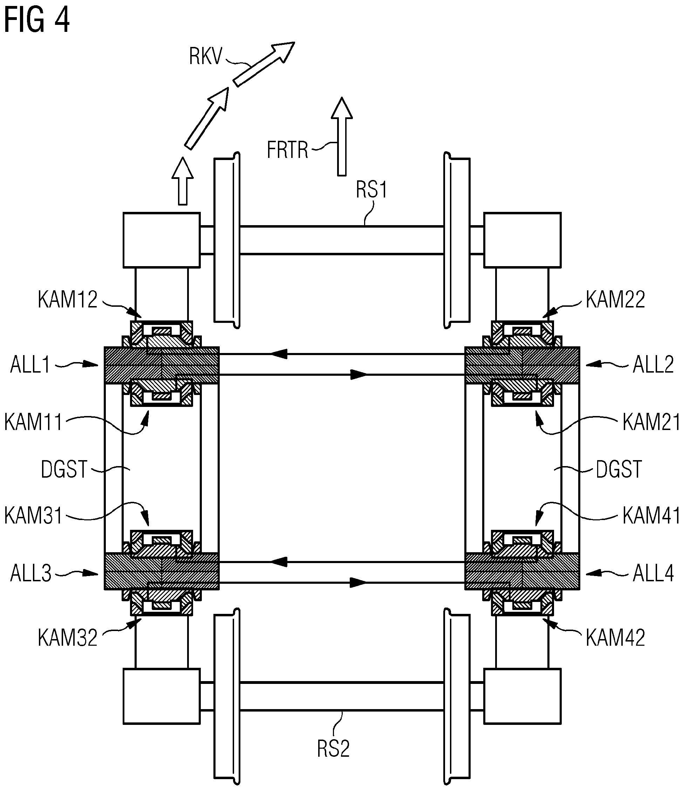

FIG 4 zeigt zwei Radsätze RS1, RS2 eines Schienenfahrzeugs, die in bekannter Weise über hydraulische Achslenkerlager ALL1 bis ALL4 mit einem Drehgestell DGST eines Schienenfahrzeugs verbunden sind.

### Für einen ersten Radsatz RS1 des Schienenfahrzeugs gilt:

Der erste Radsatz RS1 ist über zwei hydraulische Achslenkerlager ALL1 und ALL2, die externe Anschlüsse aufweisen und wie vorstehend beschrieben ausgebildet sind, mit dem Drehgestell DGST verbunden.

Ein erstes Achslenkerlager ALL1 weist zwei diametral gegenüberliegende Kammern KAM11, KAM12 auf, die als erste Kammer KAM11 bzw. als zweite Kammer KAM12 bezeichnet werden.

In Fahrtrichtung FRTR des Schienenfahrzeugs gesehen ist die zweite Kammer KAM12 vor der ersten Kammer KAM11 angeordnet.

Ein zweites Achslenkerlager ALL2 weist zwei diametral gegenüberliegende Kammern KAM21, KAM22 auf, die als erste Kammer KAM21 bzw. als zweite Kammer KAM22 bezeichnet werden.

In Fahrtrichtung FRTR des Schienenfahrzeugs gesehen ist die zweite Kammer KAM22 vor der ersten Kammer KAM21 angeordnet.

Beim ersten Radsatz RS1 ist die erste Kammer KAM11 des ersten Achslenkerlagers ALL1 mit der ersten Kammer KAM21 des zweiten Achslenkerlagers ALL2 zum Fluidaustausch über externe Anschlüsse verbunden.

Beim ersten Radsatz RS1 ist die zweite Kammer KAM12 des ersten Achslenkerlagers ALL1 mit der zweiten Kammer KAM22 des zweiten Achslenkerlagers ALL2 zum Fluidaustausch über externe Anschlüsse verbunden.

Fährt das Schienenfahrzeug in Fahrtrichtung FRTR gesehen in eine Rechtskurvenfahrt RKV, dann wird durch den Einfluss resultierender Längskräfte das Fluid von der zweiten Kammer KAM22 des zweiten Achslenkerlagers ALL2 in die zweite Kammer KAM12 des ersten Achslenkerlagers ALL1 übertragen.

Diese Fluid-Übertragung wird durch eine Änderung der relativen Lage der Gehäuse-Elemente der Achslenklager ALL1, ALL2 verursacht, die wieder durch die Längskräfte verursacht wird. Entsprechend entgegengesetzt wird Fluid von der ersten Kammer KAM11 des ersten Achslenkerlagers ALL1 in die erste Kammer KAM21 des zweiten Achslenkerlagers ALL2 übertragen.

### Für einen zweiten Radsatz RS2 des Schienenfahrzeugs gilt:

Der zweite Radsatz RS2 ist über zwei hydraulische Achslenkerlager ALL3 und ALL4, die externe Anschlüsse aufweisen und wie vorstehend beschrieben ausgebildet sind, mit dem Drehgestell DGST verbunden.

Ein erstes Achslenkerlager ALL3 weist zwei diametral gegenüberliegende Kammern KAM31, KAM32 auf, die als erste Kammer KAM31 bzw. als zweite Kammer KAM32 bezeichnet werden.

In Fahrtrichtung FRTR des Schienenfahrzeugs gesehen ist die erste Kammer KAM31 vor der zweiten Kammer KAM32 angeordnet.

Ein zweites Achslenkerlager ALL4 weist zwei diametral gegenüberliegende Kammern KAM41, KAM42 auf, die als erste Kammer KAM41 bzw. als zweite Kammer KAM42 bezeichnet werden.

In Fahrtrichtung FRTR des Schienenfahrzeugs gesehen ist die erste Kammer KAM41 vor der zweiten Kammer KAM21 angeordnet.

Beim zweiten Radsatz RS2 ist die erste Kammer KAM31 des ersten Achslenkerlagers ALL3 mit der ersten Kammer KAM41 des zweiten Achslenkerlagers ALL4 zum Fluidaustausch über externe Anschlüsse verbunden.

Beim zweiten Radsatz RS2 ist die zweite Kammer KAM32 des ersten Achslenkerlagers ALL3 mit der zweiten Kammer KAM42 des zweiten Achslenkerlagers ALL4 zum Fluidaustausch über externe Anschlüsse verbunden.

Fährt das Schienenfahrzeug in Fahrtrichtung FRTR gesehen in die Rechtskurvenfahrt RKV, dann wird Fluid von der ersten Kammer KAM41 des zweiten Achslenkerlagers ALL4 in die erste Kammer KAM31 des ersten Achslenkerlagers ALL3 übertragen.

Entsprechend entgegengesetzt wird Fluid von der zweiten Kammer KAM32 des ersten Achslenkerlagers ALL3 in die zweite Kammer KAM42 des zweiten Achslenkerlagers ALL4 übertragen.

Durch die beschriebene Anordnung und Verbindung der Kammern wird die Bewegung der rechten und der linken Radsatz-Seite gekoppelt und es entsteht durch eine entsprechende Längskraftübertragung ein vorteilhaftes Bewegungsverhalten des Radsatzes.

Jeweilige Längskräfte, die bei Geradeaus-Fahrten oder bei Kurvenfahrten auftreten, werden zwischen den oben beschriebenen Komponenten wie dargestellt übertragen.

Weitere Achslenklager sind in den Druckschriften WO 2016 008 731 A1, EP 1 228 937 A1 und FR 2 551 412 A1 beschrieben.

Es ist die Aufgabe der vorliegenden Erfindung, eine verbesserte Anordnung zur Übertragung von Längskräften bei einem Schienenfahrzeug anzugeben.

Diese Aufgabe wird durch die Merkmale des Anspruchs 1 gelöst. Vorteilhafte Weiterbildungen sind in den abhängigen Ansprüchen angegeben.

Die Erfindung betrifft eine Anordnung zur Übertragung von Längskräften bei einem Schienenfahrzeug, mit einem hydraulischen Achslenkerlager, mit einem Radsatz und mit einem Drehgestell des Schienenfahrzeugs. Das hydraulische Achslenkerlager weist ein äußeres Gehäuseelement und ein inneres Gehäuseelement auf, wobei eines der Gehäuseelemente mit dem Drehgestell verbunden ist, während das andere Gehäuseelement mit dem Radsatz verbunden ist. Durch das Schienenfahrzeug bei der Fahrt gebildete Längskräfte werden dadurch zwischen Radsatz und Drehgestell übertragen.

Das äußere Gehäuseelement umschließt das innere Gehäuseelement in einem radialen Abstand, so dass ein Ringspalt gebildet wird. Im Ringspalt ist ein elastisches Element derart angeordnet ist, dass es zwei einander gegenüberliegende Kammern mit jeweiligem Kammervolumen bildet.

Durch die Längskräfte wird eine Änderung der relativen Lage des inneren Gehäuseelements zum äußeren Gehäuseelement verursacht, die eine wechselweise Volumenänderung der beiden Kammern veranlasst.

Die beiden Kammern beinhalten ein Fluid und sind über das Fluid derart miteinander gekoppelt sind, dass über eine Bewegung des Fluids die wechselweise Volumenänderung der beiden Kammern erfolgt. Die Kopplung der beiden Kammern ist durch das Fluid über zwei externe Anschlüsse des Achslenkerlagers und über eine externe Leitung, die die beiden Anschlüsse miteinander verbindet, realisiert.

Die externe Leitung weist ein Dämpfungselement auf, die die externe Leitung zweiteilt. Das Dämpfungselement ist derart ausgebildet, dass eine aufgrund des Längskräfte entstehende Bewegung des Fluids, die die wechselweise Volumenänderung der beiden Kammern verursacht, gedämpft erfolgt.

Über das Dämpfungselement wird in das System auch eine Steifigkeit eingebracht bzw. diese beeinflusst.

Eine erste Kammer ist über einen ersten Kanal, der im Inneren des inneren Gehäuseelements verläuft, mit einem ersten Anschluss verbunden. Der erste Anschluss ist als Teil des inneren Gehäuseelements im Außenbereich des Achslenkerlagers angeordnet.

Eine zweite Kammer ist über einen zweiten Kanal, der im Inneren des inneren Gehäuseelements verläuft, mit einem zweiten Anschluss verbunden. Der zweite Anschluss ist als Teil des inneren Gehäuseelements im Außenbereich des Achslenkerlagers angeordnet.

Das Dämpfungselement ist als ein mit dem Fluid gefüllter Zylinder mit integriertem Stempel ausgebildet. Der Zylinder weist ein Zylindergesamtvolumen auf, das über den beweglich gelagerten Stempel in ein erstes Zylinderteilvolumen und in ein zweites Zylinderteilvolumen aufgeteilt wird, so dass je nach Bewegungsrichtung des Fluids im Zylinder durch den Stempel eine wechselweise Volumenänderung des ersten Zylinderteilvolumens und des zweiten Zylinderteilvolumens erfolgt.

Das erste Zylinderteilvolumen ist mit einem ersten Anschluss des Achslenkerlager verbunden, während das zweite Zylinderteilvolumen mit einem zweiten Anschluss des Achslenkerlagers verbunden ist.

Der Stempel ist mit einer Feder und mit einem dazu parallel geschalteten Dämpfer gekoppelt, um die durch die Bewegung des Fluids verursachte Bewegung des Stempels zu dämpfen.

Durch die Feder und durch den Dämpfer wird eine beabsichtigte Dämpfung eingestellt.

Durch die vorliegende Erfindung werden instabile Eigenformen des Schienenfahrzeugs in stabile Eigenformen überführt.

Durch die vorliegende Erfindung werden erhöhte Fahrgeschwindigkeiten bei hoher Sicherheit erreicht.

Durch die vorliegende Erfindung wird die Fahrstabilität des Schienenfahrzeugs erhöht.

Durch die vorliegende Erfindung wird über die beiden Leitungen erreicht, dass das Dämpfungselement an einer beliebigen Stelle des Schienenfahrzeugs positioniert werden kann.

Durch die vorliegende Erfindung bzw. durch das über externe Leitungen angebundene Dämpfungselement wird ermöglicht, dieses Dämpfungselement vorteilhaft an einem Ort mit genügend großem Einbauraum und damit ggf. auch fern zu den Achslenkerlagern anzuordnen.

Damit wird eine gegebene Packungsdichte von Komponenten im Umfeld der Achslenkerlager bzw. des Drehgestells nicht zusätzlich erhöht. Bevorzugte Orte für das Dämpfungselement sind beispielswiese im gesamten Bereich des Wagenkastens denkbar.

Insgesamt resultiert aus den Einzelsteifigkeiten der Achslenkerlager und den Einzeldämpfungen der Achslenkerlager sowie der Dämpfung im hydraulischen System eine Gesamtsteifigkeit und eine Gesamtdämpfung. Durch die vorliegende Erfindung werden geeignete beziehungsweise optimale Parameterbereiche für Steifigkeit und Dämpfung erreicht.

Nachfolgend wird die vorliegende Erfindung beispielhaft anhand einer Zeichnung näher erläutert. Dabei zeigt:
- FIG 1: ein hydraulisches Achslenkerlager mit externen Anschlüssen, das ein wesentliches Element der vorliegenden Erfindung bildet,
- FIG 2: eine Schnittdarstellung des in FIG 1 gezeigten hydraulischen Achslenkerlagers,
- FIG 3: mit Bezug auf FIG 1 und FIG 2 die erfindungsgemäße Anordnung zur Übertragung von Längskräften bei einem Schienenfahrzeug, sowie
- FIG 4: den vorstehend in der Einleitung beschriebenen Stand der Technik.

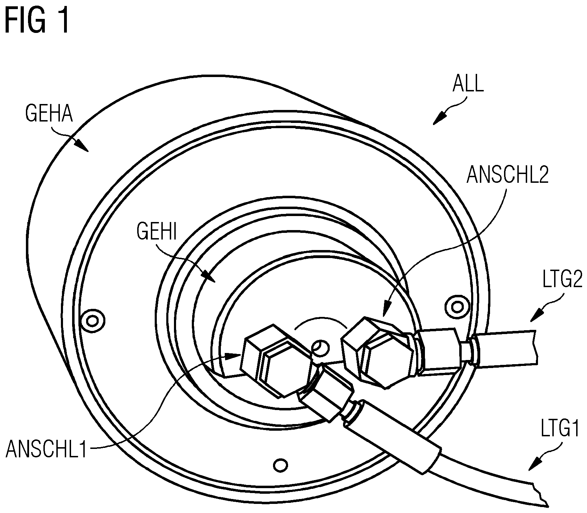

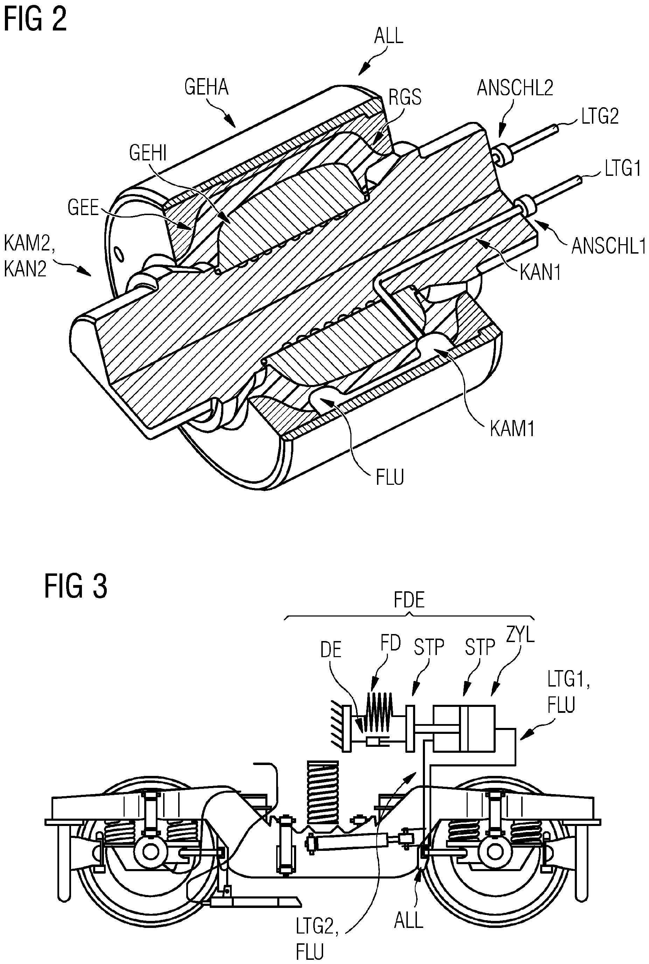

FIG 1 zeigt ein hydraulisches Achslenkerlager ALL mit externen Anschlüssen ANSCHL1, ANSCHL2, das ein wesentliches Element der vorliegenden Erfindung bildet, während FIG 2 eine Schnittdarstellung des in FIG 1 gezeigten hydraulischen Achslenkerlagers ALL zeigt.

Das Achslenkerlager ALL weist zwei externe Anschlüsse ANSCHL1, ANSCHL2 auf, an denen jeweilige Verbindungsleitungen LTG1, LTG2 angebracht sind.

Das Achslenkerlager ALL weist als hydraulische Buchse ein äu-ßeres Gehäuseelement GEHA und ein inneres Gehäuseelement GEHI auf. Das äußere Gehäuseelement GEHA umschließt das innere Gehäuseelement GEHI in einem radialen Abstand, so dass ein Ringspalt RGS gebildet wird.

Im Ringspalt RGS ist ein (Gummi-) elastisches Element GEE derart angeordnet, dass es zwei diametral einander gegenüberliegende Kammern KAM1, KAM2 bildet und diese begrenzt.

Über das elastische Element GEE wird eine Volumenänderung der beiden Kammern KAM1, KAM2 ermöglicht.

Gezeigt ist hier im Detail eine erste Kammer KAM1, die mit einem hydraulischen Fluid FLU gefüllt ist.

Die erste Kammer KAM1 ist über einen ersten Kanal KAN1, der im Inneren des inneren Gehäuseelement GEHI verläuft, mit dem ersten Anschluss ANSCHL1 verbunden.

Der erste Anschluss ANSCHL1 ist Teil des inneren Gehäuseelements GEHI und ist im Außenbereich des Achslenkerlagers ALL angeordnet.

Entsprechendes gilt für eine zweite Kammer KAM2, die hier nur angedeutet ist und die der ersten Kammer KAM1 gegenüber liegt, zu dieser also diametral angeordnet ist.

Die zweite Kammer KAM2 ist mit dem hydraulischen Fluid FLU gefüllt.

Die zweite Kammer KAM2 ist über einen zweiten Kanal KAN2, der ebenfalls im Inneren des inneren Gehäuseelement GEHI verläuft, mit dem zweiten Anschluss ANSCHL2 verbunden.

Der zweite Anschluss ANSCHL2 ist Teil des inneren Gehäuseelements GEHI und ist im Außenbereich des Achslenkerlagers ALL angeordnet.

Wird das Fluid FLU Kammer-abhängig unter Druck gesetzt, wird eine Volumenänderung der beiden Kammern KAM1, KAM2 realisiert, die wiederum die relative Lage des inneren Gehäuseelements GEHI zum äußeren Gehäuseelement GEHA beeinflusst bzw. ändert.

Damit wird die Längs- bzw. die Quersteifigkeit des hydraulischen Achslenkerlagers ALL beeinflusst, wie in der nachfolgenden Figur gezeigt wird.

FIG 3 zeigt mit Bezug auf FIG 1 und FIG 2 die erfindungsgemä-ße Anordnung zur Übertragung von Längskräften bei einem Schienenfahrzeug.

Wie vorstehend beschrieben weist das Achslenkerlager ALL einen ersten externen Anschluss ANSCHL1 und einen zweiten externen Anschluss ANSCHL2 auf, an denen die erste Leitung LTG1 bzw. die zweite Leitung LTG2 angeschlossen ist.

Die beiden Kammern KAM1, KAM2 sind in ihrem Volumen veränderbar und beinhalten jeweils das Fluid FLU.

Das Fluid FLU der ersten Kammer KAM1 wirkt über den ersten Anschluss ANSCHL1 und über die nachfolgende erste Leitung LTG1 auf ein Dämpfungselement FDE.

Das Fluid FLU der zweiten Kammer KAM2 wirkt über den zweiten Anschluss ANSCHL2 und über die nachfolgende zweite Leitung LTG2 ebenfalls auf das Dämpfungselement FDE.

Das Dämpfungselement FDE ist derart zwischen den beiden Leitungen geschaltet und ausgestaltet, dass die Bewegungsrichtung des Fluids FLU beider Kammern KAM1, KAM2 und somit die Volumenänderung der beiden Kammern KAM1, KAM2 gedämpft und ggf. zeitlich verzögert erfolgt.

Über die gedämpfte bzw. zeitlich verzögerte Volumenänderung wird die Längs- bzw. die Quersteifigkeit des hydraulischen Achslenkerlagers ALL eingestellt.

Über die beiden Leitungen LTG1, LTG2 wird vorteilhaft ermöglicht, dass das Dämpfungselement FDE an einer beliebigen Stelle des Schienenfahrzeugs positioniert werden kann.

Im hier dargestellten Funktionsprinzip ist das Dämpfungselement FDE beispielhaft als Zylinder ZYL mit integriertem Stempel STP dargestellt, wobei der Stempel STP auf eine Feder FD und auf einen Dämpfer DE wirkt, der zur Feder FD parallelgeschaltet ist.

Der Zylinder ZYL weist ein Zylindergesamtvolumen auf, das über den beweglich gelagerten Stempel STP in ein erstes Zylinderteilvolumen und in ein zweites Zylinderteilvolumen aufgeteilt wird.

Je nach Bewegungsrichtung des Stempels STP wird das erstes Zylinderteilvolumen vergrößert, wenn das zweite Zylinderteilvolumen verkleinert wird, und umgekehrt.

Auf eine erste Seite des Stempels STP wirkt das Fluid FLU der ersten Kammer KAM1 bzw. der ersten Leitung LTG1, während auf eine zweite Seite des Stempels STP, die der ersten Seite gegenüberliegt, das Fluid der zweiten Kammer KAM2 bzw. der zweiten Leitung LTG2 wirkt.

Die Bewegungsrichtung des Stempels STP wird über einen Druckunterschied des Fluids FLU in den beiden Leitungen LTG1, LTG2 bzw. in den beiden Kammern KAM1, KAM2 bestimmt.

Durch die Bewegung des Stempels STP wird die Wirkung auf die Feder FD und auf den Dämpfer DE geändert und somit eine beabsichtigte Dämpfung eingestellt.

## Patentansprüche

1. Anordnung zur Übertragung von Längskräften,
- mit einem Schienenfahrzeug und
- mit einem hydraulischen Achslenkerlager (ALL), mit einem Radsatz (RS1,RS2) und mit einem Drehgestell (DGST) des Schienenfahrzeugs,
- bei dem das hydraulische Achslenkerlager (ALL) ein äußeres Gehäuseelement (GEHA) und ein inneres Gehäuseelement (GEHI) aufweist,
- bei dem eines der Gehäuseelemente (GEHI) mit dem Drehgestell (DGST) verbunden ist und das andere Gehäuseelement (GEHA) mit dem Radsatz (RS1,RS2) verbunden ist, um durch das Schienenfahrzeug bei der Fahrt gebildete Längskräfte zwischen Radsatz (RS1,RS2) und Drehgestell (DGST) zu übertragen,
- bei dem das äußere Gehäuseelement (GEHA) das innere Gehäuseelement (GEHI) in einem radialen Abstand umschließt, so dass ein Ringspalt (RGS) gebildet wird,
- bei dem im Ringspalt (RGS) ein elastisches Element (GEE) derart angeordnet ist, dass es zwei einander gegenüberliegende Kammern (KAM1, KAM2) mit jeweiligem Kammervolumen bildet,
- wobei durch die Längskräfte eine Änderung der relativen Lage des inneren Gehäuseelements (GEHI) zum äußeren Gehäuseelement (GEHA) verursacht wird, die eine wechselweise Volumenänderung der beiden Kammern (KAM1,KAM2) veranlasst,
- bei dem die beiden Kammern (KAM1,KAM2) ein Fluid (FLU) beinhalten und über das Fluid (FLU) derart miteinander gekoppelt sind, dass über eine Bewegung des Fluids (FLU) die wechselweise Volumenänderung der beiden Kammern (KAM1,KAM2) erfolgt,
- bei der die Kopplung der beiden Kammern (KAM1,KAM2) durch das Fluid (FLU) über zwei externe Anschlüsse (ANSCHL1,ANSCHL2) des Achslenkerlager (ALL) und über eine externe Leitung (LTG1,LTG2), die die beiden Anschlüsse (ANSCHL1, ANSCHL2) miteinander verbindet, realisiert ist,
- bei der die externe Leitung (LTG1,LTG2) ein Dämpfungselement (FDE) aufweist, die die externe Leitung zweiteilt, und
- bei der das Dämpfungselement (FDE) derart ausgebildet ist, dass eine aufgrund des Längskräfte entstehende Bewegung des Fluids (FLU), die die wechselweise Volumenänderung der beiden Kammern (KAM1, KAM2) verursacht, gedämpft erfolgt,
- bei der eine erste Kammer (KAM1) über einen ersten Kanal (KAN1), der im Inneren des inneren Gehäuseelements (GEHI) verläuft, mit einem ersten Anschluss (ANSCHL1) verbunden ist,
- bei der der erste Anschluss (ANSCHL1) als Teil des inneren Gehäuseelements (GEHI) im Außenbereich des Achslenkerlagers (ALL) angeordnet ist,
- bei dem eine zweite Kammer (KAM2) über einen zweiten Kanal (KAN2), der im Inneren des inneren Gehäuseelements (GEHI) verläuft, mit einem zweiten Anschluss (ANSCHL2) verbunden ist,
- bei der der zweite Anschluss (ANSCHL2) als Teil des inneren Gehäuseelements (GEHI) im Außenbereich des Achslenkerlagers (ALL) angeordnet ist,
- bei der das Dämpfungselement (FDE) als ein mit dem Fluid (FLU) gefüllter Zylinder (ZYL) mit integriertem Stempel (STP) ausgebildet ist,
- bei der der Zylinder (ZYL) ein Zylindergesamtvolumen aufweist, das über den beweglich gelagerten Stempel (STP) in ein erstes Zylinderteilvolumen und in ein zweites Zylinderteilvolumen aufgeteilt wird, so dass je nach Bewegungsrichtung des Fluids (FLU) im Zylinder (ZYL) durch den Stempel (STP) eine wechselweise Volumenänderung des ersten Zylinderteilvolumens und des zweiten Zylinderteilvolumens erfolgt,
- bei der das erste Zylinderteilvolumen mit einem ersten Anschluss (ANSCHL1) des Achslenkerlager (ALL) verbunden ist,
- bei der das zweite Zylinderteilvolumen mit einem zweiten Anschluss (ANSCHL2) des Achslenkerlager (ALL) verbunden ist,
- bei der der Stempel (STP) mit einer Feder (FD) und mit einem dazu parallel geschalteten Dämpfer (DE) gekoppelt ist, um die durch die Bewegung des Fluids (FLU) verursachte Bewegung des Stempels (STP) zu dämpfen,
- bei der durch die Feder (FD) und durch den Dämpfer (DE) eine beabsichtigte Dämpfung eingestellt ist.

## Claims

1. Assembly for transmitting longitudinal forces,
- having a rail vehicle and
- having a hydraulic axle link bearing (ALL), having a wheelset (RS1, RS2) and having a bogie (DGST) of the rail vehicle,
- in which the hydraulic axle link bearing (ALL) has an outer housing element (GEHA) and an inner housing element (GEHI),
- in which one of the housing elements (GEHI) is connected to the bogie (DGST) and the other housing element (GEHA) is connected to the wheelset (RS1, RS2), in order to transmit longitudinal forces formed by the rail vehicle during travel between the wheelset (RS1, RS2) and the bogie (DGST),
- in which the outer housing element (GEHA) encloses the inner housing element (GEHT) at a radial spacing, such that an annular gap (RGS) is formed,
- in which an elastic element (GEE) is arranged in the annular gap (RGS) in such a way that it forms two mutually opposite chambers (KAM1, KAM2) with a respective chamber volume,
- wherein the longitudinal forces cause a change in the position of the inner housing element (GEHT) relative to the outer housing element (GEHA), which causes an alternating change in volume in the two chambers (KAM1, KAM2),
- in which the two chambers (KAM1, KAM2) contain a fluid (FLU) and are coupled to one another by way of the fluid (FLU) in such a way that a movement of the fluid (FLU) brings about the alternating change in volume in the two chambers (KAM1, KAM2),
- in which the coupling of the two chambers (KAM1, KAM2) by the fluid (FLU) is realized by way of two external connections (ANSCHL1, ANSCHL2) of the axle link bearing (ALL) and by way of an external line (LTG1, LTG2) which connects the two connections (ANSCHL1, ANSCHL2) to one another,
- in which the external line (LTG1, LTG2) has a damping element (FDE) which divides the external line in two, and
- in which the damping element (FDE) is designed in such a way that a movement of the fluid (FLU), said movement being produced owing to the longitudinal forces and causing the alternating change in volume in the two chambers (KAM1, KAM2), is effected in a damped manner,
- in which a first chamber (KAM1) is connected to a first connection (ANSCHL1) by way of a first duct (KAN1) which runs inside the inner housing element (GEHI),
- in which the first connection (ANSCHL1) is arranged as part of the inner housing element (GEHI) in the outer region of the axle link bearing (ALL),
- in which a second chamber (KAM2) is connected to a second connection (ANSCHL2) by way of a second duct (KAN2) which runs inside the inner housing element (GEHI),
- in which the second connection (ANSCHL2) is arranged as part of the inner housing element (GEHT) in the outer region of the axle link bearing (ALL),
- in which the damping element (FDE) is in the form of a cylinder (ZYL) which is filled with the fluid (FLU) and which has an integrated ram (STP),
- in which the cylinder (ZYL) has a cylinder total volume which is divided into a first cylinder partial volume and into a second cylinder partial volume by way of the movably mounted ram (STP), such that, depending on the movement direction of the fluid (FLU) in the cylinder (ZYL), an alternating change in volume in the first cylinder partial volume and in the second cylinder partial volume is effected by the ram (STP),
- in which the first cylinder partial volume is connected to a first connection (ANSCHL1) of the axle link bearing (ALL),
- in which the second cylinder partial volume is connected to a second connection (ANSCHL2) of the axle link bearing (ALL),
- in which the ram (STP) is coupled to a spring (FD) and to a damper (DE) which is connected in parallel therewith, in order to damp the movement of the ram (STP) caused by the movement of the fluid (FLU),
- in which an intended damping action is set by way of the spring (FD) and by way of the damper (DE).

## Revendications

1. Dispositif de transmission de forces longitudinales
- avec un véhicule ferroviaire et
- avec un palier de liaison d'essieu hydraulique (ALL), avec un ensemble de roues (RS1, RS2) et avec un châssis rotatif (DGST) du véhicule ferroviaire,
- dans lequel le palier de liaison d'essieu hydraulique (ALL) présente un élément de boîtier extérieur (GEHA) et un élément de boîtier intérieur (GEHI),
- dans lequel l'un des éléments de boîtier (GEHI) est relié au châssis rotatif (DGST) et l'autre élément de boîtier (GEHA) est relié à l'ensemble de roues (RS1, RS2) pour transmettre des forces longitudinales formées par le véhicule ferroviaire pendant le déplacement entre l'ensemble de roues (RS1, RS2) et le châssis rotatif (DGST),
- dans lequel l'élément de boîtier extérieur (GEHA) entoure l'élément de boîtier intérieur (GEHI) avec un écartement radial de sorte qu'une fente annulaire (RGS) est formée,
- dans lequel un élément élastique (GEE) est disposé dans la fente annulaire (RGS) d'une manière telle qu'il forme deux chambres opposées l'une à l'autre (KAM1, KAM2) avec un volume de chambre respectif,
- dans lequel du fait des forces longitudinales, une modification de la position relative de l'élément de boîtier intérieur (GEHI) par rapport à l'élément de boîtier extérieur (GEHA) est causée qui provoque une modification alternative du volume des deux chambres (KAM1, KAM2),
- dans lequel les deux chambres (KAM1, KAM2) contiennent un fluide (FLU) et sont couplées ensemble au moyen du fluide (FLU) d'une manière telle que la modification alternative de volume des deux chambres (KAM1, KAM2) se produit par un mouvement du fluide (FLU),
- dans lequel le couplage des deux chambres (KAM1, KAM2) est réalisé par le fluide (FLU) au moyen de deux raccords externes (ANSCHL1, ANSCHL2) du palier de liaison d'essieu (ALL) et d'une conduite externe (LTG1, LTG2), qui relie ensemble les deux raccords (ANSCHL1, ANSCHL2),
- dans lequel la conduite externe (LTG1, LTG2) présente un élément d'amortissement (FDE) qui divise en deux la conduite externe, et
- dans lequel l'élément d'amortissement (FDE) est conçu d'une manière telle qu'un mouvement du fluide (FLU), survenant en raison des forces longitudinales, qui provoque la modification alternative du volume des deux chambres (KAM1, KAM2) est amorti,
- dans lequel une première chambre (KAM1) est reliée à un premier raccord (ANSCHL1) par un premier canal (KAN1) qui passe à l'intérieur de l'élément de boîtier intérieur (GEHI),
- dans lequel le premier raccord (ANSCHL1) en tant que partie de l'élément de boîtier intérieur (GEHI) est disposé dans la zone externe du palier de liaison d'essieu (ALL),
- dans lequel une deuxième chambre (KAM2) est reliée à un deuxième raccord (ANSCHL2) par un deuxième canal (KAN2) qui passe à l'intérieur de l'élément de boîtier intérieur (GEHI),
- dans lequel le deuxième raccord (ANSCHL2) en tant que partie de l'élément de boîtier intérieur (GEHI) est disposé dans la zone externe du palier de liaison d'essieu (ALL),
- dans lequel l'élément d'amortissement (FED) est conçu comme un cylindre (ZYL) empli du fluide (FLU) avec poinçon (STP) intégré,
- dans lequel le cylindre (ZYL) présente un volume complet de cylindre qui est divisé par le poinçon (STP) logé de façon mobile en un premier volume partiel de cylindre et en un deuxième volume partiel de cylindre de sorte que, selon le sens de mouvement du fluide (FLU) dans le cylindre (ZYL) par le poinçon (STP) se produit une modification alternative du volume du premier volume partiel de cylindre et du deuxième volume partiel de cylindre,
- dans lequel le premier volume partiel de cylindre est relié à un premier raccord (ANSCHL1) du palier de liaison d'essieu (ALL),
- dans lequel le deuxième volume partiel de cylindre est relié à un deuxième raccord (ANSCHL2) du palier de liaison d'essieu (ALL),
- dans lequel le poinçon (STP) est couplé à un ressort (FD) et à un amortisseur (DE) commuté en parallèle pour amortir le mouvement du poinçon (STP) provoqué par le mouvement du fluide (FLU),
- dans lequel un amortissement intentionnel est réglé par le ressort (FD) et par l'amortisseur (DE).
